# EUROPÄISCHE PATENTSCHRIFT

(11) **EP 2 210 985 B1**
(45) Veröffentlichungstag und Bekanntmachung des Hinweises auf die Patenterteilung: **12.03.2014**
(21) Anmeldenummer: 10000416.7
(22) Anmeldetag: 18.01.2010
(51) Int. Cl.: E03B 7/04, F16L 39/00, F24D 17/00

(54) **Anschlussvorrichtung**
Connecting block
Dispositif de raccordement

(30) Priorität: 27.01.2009 DE 202009001030 U
(43) Veröffentlichungstag der Anmeldung: 28.07.2010
(73) Patentinhaber: Gebr. Kemper GmbH + Co. KG Metallwerke, 57462 Olpe (DE)
(72) Erfinder: Petzolt, Ulrich, 57439 Attendorn (DE); Kelbassa, Rainer, 57439 Attendorn (DE)
(74) Vertreter: Grünecker, Kinkeldey, Stockmair & Schwanhäusser

(56) Entgegenhaltungen:
- WO-A2-2004/070279
- DE-A1-102004 032 958
- DE-U1- 8 915 477
- GB-A- 2 448 384

## Beschreibung

Die vorliegende Erfindung betrifft eine Anschlussvorrichtung für ein Trink- oder Brauchwasser-system mit den oberbegrifflichen Merkmalen von Anspruch 1.

Eine gattungsgemäße Anschlussvorrichtung ist aus der DE 89 15 477 U1 bekannt.

Die DE 89 15 477 U1 offenbart eine Venturiarmatur, welche in einem Strang einer Reinstwasserversorgungsleitung montiert ist. Die Venturiarmatur enthält eine Einfädelöffnung, eine dieser nachgelagerte Ausfädelöffnung sowie eine zwischen der Ausfädelöffnung und der Einfädelöffnung vorgesehene Querschnittsverengung, welche innerhalb des Strangs ausgebildet ist. An die Einfädelöffnung ist über ein Ventil eine Ringleitung angeschlossen, welche als einzelnes Rohr zu einem Verbraucher führt und hiernach an die Ausfädelöffnung über ein weiteres Ventil angeschlossen ist. Ein einzelnes Rohr verläuft demnach als Ringleitung von der Einfädelöffnung zur Ausfädelöffnung.

Zudem ist aus der GB 2 448 384 A ein regeneratives Heizsystem bekannt. Dieses System enthält einen Boiler mit einer Zu- und einer Ableitung von Wasser. An die Zu- bzw. Ableitung ist ein als Rohr-in-Rohr-Leitung ausgeführter Wärmetauscher angeschlossen, der zu einem Verbraucher führt. Der Wärmetauscher ist mit einem Einlassanschlussstück, welches einstückig mit der Zuleitung verschweißt ist und mit einem Auslassanschlussstück, welches einstückig mit der Ableitung verschweißt ist, versehen.

Zudem ist ein Trink- und Brauchwassersystem, an welches die gattungsgemäße Anschlussvorrichtung angeschlossen werden kann, beispielsweise aus der auf die Anmelderin zurückgehenden EP 1 887 150 A2 bekannt. Bei dem aus dieser Patentanmeldung vorbekannten Trink- oder Brauchwassersystem handelt es sich um ein System zur Versorgung eines Gebäudes mit Trink-oder Brauchwasser. Dabei kann es sich um Warmwasser oder Kaltwasser handeln. Das Wasser wird aus einer Übergabestelle aus einem öffentlichen Versorgungsnetz an das Trink- oder Brauchwassersystem übergeben. Das System hat des Weiteren wenigstens einen Strang für die Zuleitung von Wasser an Verbraucher. Regelmäßig sind mehrere Verbraucher an das Trink-oder Brauchwassersystem angeschlossen. Diese Verbraucher sind üblicherweise mit einer Schmutzwasserentsorgungsleitung verbunden, die mit dem öffentlichen Entsorgungsnetz kommuniziert. Als Verbraucher kann aber beispielsweise auch ein Wasserhahn angesehen werden, der der Gartenbewässerung dient. Bei dieser Fallgestaltung wird sämtliches Brauchwasser zur Gartenbewässerung genutzt und nicht unmittelbar dem Entsorgungsnetz zugeleitet.

Das Trink- oder Brauchwassersystem hat des Weiteren wenigstens eine in dem Strang vorgesehene Querschnittsverengung, der in Strömungsrichtung im Strang eine Einfädelöffnung vor-und in Strömungsrichtung des Stranges eine Ausfädelöffnung nachgelagert vorgesehen ist. Durch diese Anordnung von Einfädel- und Ausfädelöffnung unter Zwischenschaltung einer Strömungsverengung kann eine Druckdifferenz erzeugt werden, die zu einer sich zwischen der Einfädel- und der Ausfädelöffnung erstreckenden Ringleitung zu einer Zirkulation dann führt, wenn über den Strang Wasser entnommen wird, und zwar an einer in Strömungsrichtung dieser Anordnung von Einfädelöffnung, Strömungsverengung und Ausfädelöffnung nachgelagerten Stelle des Stranges. Die Ringströmung erfolgt dementsprechend aufgrund einer Druckdifferenz, die über den Venturieffekt bewirkt wird.

Nach der Offenbarung der EP 1 887 150 kann über eine solche Ringströmung, bewirkt durch den Venturieffekt bei einer Durchströmung im Strang, eine Verkeimung der Ringleitungen vermieden werden. Das Wasser in der jeweiligen Ringleitung bleibt auch dann in Bewegung, wenn innerhalb der der Ringleitung zugeordneten Nasszelle kein Wasser entnommen wird. So kann beispielsweise am Ende eines Stranges auch ein motorisch betriebenes Ventil vorgesehen sein, um durch Öffnen des Ventils den Strang zu durchströmen und hierbei nach dem Venturieffekt sämtliche an den Strang angeschlossene Ringleitungen zu durchspülen.

Der vorliegenden Erfindung liegt das Problem zugrunde, ein hinsichtlich des Aufbaus vereinfachtes Trink- oder Brauchwassersystem anzugeben, welches unter Beibehaltung der obigen grundsätzlichen Vorteile und Wirkungen einen leichteren Aufbau zulässt.

Zur Lösung dieses Problems wird mit der vorliegenden Erfindung eine Anschlussvorrichtung mit den Merkmalen von Anspruch 1 vorgeschlagen.

Diese unterscheidet sich von der aus der DE 89 15 477 U1 vorbekannten Armatur durch die Merkmale im kennzeichnenden Teil von Anspruch 1.

Die Anschlussvorrichtung enthält eine Anschlussarmatur mit welcher ein Verbraucher über eine Rohr-in-Rohr-Leitung an den Strang angeschlossen werden kann. Hierzu enthält die Anschlussarmatur ein mit der Einfädelöffnung verbindbares Einlassanschlussstück und ein mit der Ausfädelöffnung verbindbares Auslassanschlussstück sowie ein mit der Rohr-in-Rohr-Leitung verbindbares Doppelrohranschlussstück.

Die Einlass- und Auslassanschlussstücke der Anschlussarmatur sind an die Ein- bzw. Ausfädelöffnung des Stranges anschließbar und dementsprechend so mit einem relativen Abstand vorgesehen, dass sich diese unmittelbar an die entsprechenden Ein- bzw. Ausfädelöffnungen am Strang anschließen lassen. Der Anschluss erfolgt über eine Flanschverbindung. Des Weiteren hat die Anschlussarmatur ein Doppelrohranschlussstück zum Anschluss an die Rohr-in-Rohr-Leitung. Die zuvor erwähnten Anschlussstücke sind sämtlich Teil eines einheitlich ausgebildeten Gehäuses der Anschlussarmatur.

Die Venturiarmatur umfasst ein Teil des Rohrstücks, welches den Strang bildet. Innerhalb dieses Rohrstückes ist die Querschnittsverengung ausgebildet. Des Weiteren umfasst die Venturiarmatur die Einfädelöffnung und die Ausfädelöffnung, die seitlich in Bezug auf die Hauptströmungsrichtung im Strang abgehen. Zu dem Strang ist rechtwinklig das Doppelrohranschlussstück der Anschlussarmatur zum Anschließen der Rohr-in-Rohr-Leitung vorgesehen.

Die Anmelderin hat überraschenderweise festgestellt, dass die an einem Strang mit Querschnittsverengung über den Venturieffekt erreichbaren Druckunterschiede ausreichen können, eine Strömung auch in einer Rohr-in-Rohr-Leitung zu bewirken, bei der üblicherweise jedenfalls ein Rohr mit relativ kleinem Durchmesser ausgebildet ist, was zu einem relativ hohen Strömungswiderstand führt. Dabei kann das Innenrohr des Doppelrohranschlussstückes wahlweise mit dem Einlassanschlussstück oder mit dem Auslassanschlussstück der Anschlussarmatur kommunizieren.

Die vorliegende Erfindung schlägt erstmals die Benutzung eines Rohr-in-Rohr-Systems in Verbindung mit einem Venturieffekt zur Durchströmung einer von dem Strang abgehenden Leitung vor. Rohr-in-Rohr-Leitungen sind seit langem bekannt und werden auch als Inliner bzw. Doppelrohr bezeichnet (vgl. beispielsweise EP 0 299 471 A2 oder EP 0 665 408 A1) und dienen grundsätzlich der Zirkulation von warmem Brauchwasser in einem Gebäude mit dem Ziel, das Abkühlen von vorgewärmtem Brauchwasser in einer stehenden Wassersäule zu vermeiden. Das Warmwasser wird in dem Trink- oder Brauchwassersystem permanent zirkuliert, so dass bei Entnahme von Warmwasser an dem Verbraucher unmittelbar Warmwasser entnommen werden kann. Rohr-in-Rohr-Systeme haben üblicherweise ein Außenrohr, in dem das warme Wasser in Richtung auf den Verbraucher hin fließt, wohingegen über das Innenrohr das Wasser zurückfließt.

Dabei ist das Trink- oder Brauchwassersystem, in welchem die erfindungsgemäße Anschlussvorrichtung verwendet wird, nach der vorliegenden Erfindung nicht auf ein Warmwassersystem beschränkt. Die Durchströmung kann auch in einem Kaltwassersystem über den Venturieffekt in dem Rohr-in-Rohr-System erzielt werden. Die Anmelderin hat festgestellt, dass auch mit einer Kaltwasserdurchströmung die Qualität des Wassers, speziell des Trinkwassers, substantiell verbessert werden kann.

Die Rohr-in-Rohr-Leitung führt zu wenigstens einem Verbraucher und endet vorzugsweise im Bereich des Verbrauchers, d. h. nahe der Entnahmestelle des Verbrauchers. An dieser Stelle wird vorzugsweise auch die Strömung in dem einen Rohr der Rohr-in-Rohr-Leitung in das andere Rohr überführt.

Besonders effektiv ist die Verwirklichung eines Trink- oder Brauchwassersystems, das die erfindungsgemäße Anschlussvorrichtung enthält, in Verbindung mit einem Verbraucher, aus dem nur selten Wasser entnommen wird. Denkbar ist beispielsweise ein Wasseranschluss im Keller, in der Garage oder in einem Außenbereich eines Gebäudes oder Außenanlagen hierzu, insbesondere dann, wenn es auf eine gute Wasserqualität ankommt. In diesem Fall wird die Rohr-in-Rohr-Leitung bis hin zu dem entsprechenden Verbraucher geführt. Die durch den Venturieffekt bewirkte Strömung verhindert Verkeimung des Wassers, und zwar sowohl in einem Warmwasserstrang als auch bei einem Kaltwasserstrang, wobei zu beachten ist, dass auch bei einem Kaltwasserstrang - zumal wenn dieser durch die Außentemperatur erwärmt werden kann - im Sommer relativ hohe Temperaturen erreicht werden und damit das Risiko einer Verkeimung steigt.

Wenngleich in der vorher beschriebenen Weise eine Zwangsdurchströmung der Rohr-in-Rohr-Leitung durch Öffnen eines Ventils am Ende des Stranges bewirkt werden kann, ist es im Hinblick auf einen möglichst schonenden Umgang mit Wasser zu bevorzugen, die Querschnittsverengung mit zugeordneter Einfädel- und Ausfädelöffnung zu der Rohr-in-Rohr-Leitung in Strömungsrichtung im Strang einem Verbraucher vorgelagert vorzusehen, aus dem häufiger Wasser entnommen wird als über denjenigen Verbraucher, der über die Rohr-in-Rohr-Leitung angeschlossen ist. Bei einer Entnahme von Wasser an dem häufiger benutzten Verbraucher ergibt sich zwangsläufig eine Durchströmung in der Rohr-in-Rohr-Leitung, wodurch diese durchspült und mit frischem Wasser versorgt wird. Dieser Effekt lässt sich ohne eine Pumpe als Bestandteil des Trink- oder Brauchwassersystems erreichen. Die Zwangsdurchströmung erfolgt allein über den Venturieffekt und eine Wasserströmung, die durch Entnahme aus dem Trink-oder Brauchwassersystem bewirkt wird.

Bevorzugte Weiterbildungen der Erfindung sind in den abhängigen Ansprüchen angegeben.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine schematische Ansicht eines Trink- oder Brauchwassersystems mit einem Ausführungsbeispiel der erfindungsgemäßen Anschlussvorrichtung und
- Figur 2: ein weiteres Ausführungsbeispiel der erfindungsgemäßen Anschlussvorrichtung.

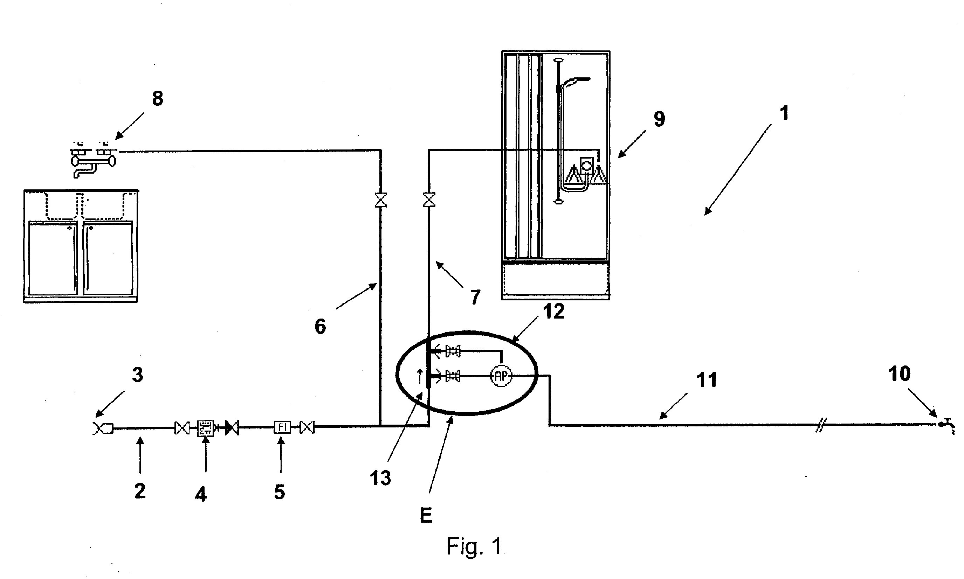

Figur 1 zeigt schematisch wesentliche Bestandteile eines Trink- oder Brauchwassersystems, welches mit Bezugszeichen 1 gekennzeichnet ist, und bei dem gezeigten Ausführungsbeispiel neben einer Übergabestelle 2 aus einem öffentlichen Versorgungsnetz 3 einen nahe dazu vorgesehenen Wasserzähler 4 und einen Filter 5 in an sich bekannter Weise aufweist. Hinter dem Filter gehen zwei Stränge 6, 7 ab. Der linke Strang 6 führt zu einem Verbraucher 8 in Form eines Wasserhahnes einer Küche. Der andere Strang 7 führt zu zwei weiteren Verbrauchern 9, 10. Bei dem Verbraucher 9 handelt es sich um eine Dusche. Bei dem Verbraucher 10 handelt es sich um einen Wasserhahn, der z. B. in einem Gartenhaus installiert sein soll. Dieser Wasserhahn 10 ist über eine Rohr-in-Rohr-Leitung 11 mit dem Strang 7 verbunden. Zwischen dem Strang 7 und der Rohr-in-Rohr-Leitung 11 befindet sich eine Anschlussarmatur 12.

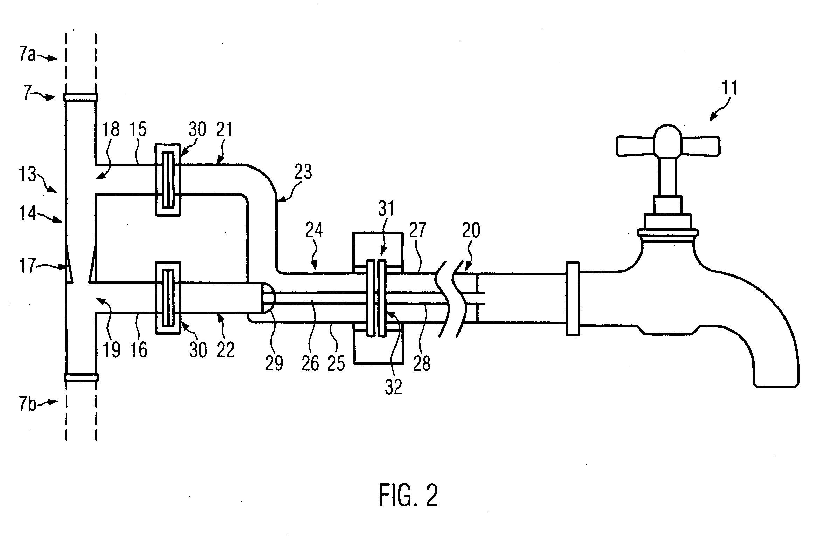

Figur 2 zeigt ein weiteres Ausführungsbeispiel einer Anschlussvorichtung (12, 13), bei dem die Strömungsrichtung in Bezug auf die Darstellung von "oben" nach "unten" verläuft. Erkennbar sind Rohrstücke 7a, 7b des Strangs 7, zwischen denen eine im Folgenden als Venturiarmatur 13 bezeichnete Armatur vorgesehen ist. Die Venturiarmatur 13 hat ein dem Durchmesser des Stranges 7 ähnlich dimensioniertes Rohrstück 14, von dem rechtwinklig zwei Anschlussrohrstücke 15, 16 abgehen. Das Rohrstück 15 liegt in Strömungsrichtung des Stranges vor einer Querschnittsverengung 17 und geht rechtwinklig von dem Rohrstück 14 ab. In Strömungsrichtung der Querschnittsverengung 17 unmittelbar nachgelagert, gegebenenfalls auch auf Höhe der engsten Stelle der Querschnittsverengung 17, mündet das Anschlussrohr 16 in das Rohrstück 15. Das Anschlussrohrstück 15 umgibt eine Einfädelöffnung 18 des Stranges 7, wohingegen das Anschlussrohrstück 16 zu einer Ausfädelöffnung 19 zum Rückführen von Strömung in einer im Wesentlichen durch die Rohr-in-Rohr-Leitung 11 ausgebildeten Ringleitung 20 führt. Die Einfädelöffnung 18 fädelt dementsprechend die Strömung aus dem Strang 7 in die Ringleitung 20 ein, wohingegen die Ausfädelöffnung 19 diese Strömung in der Ringleitung 20 in den Strang 7 zurückführt.

Zwischen der Rohr-in-Rohr-Leitung 11 und der Venturiarmatur 13 ist die Anschlussarmatur 12 vorgesehen. Sie umfasst ein mit dem Anschlussrohrstück 15 verbundenes Einlassanschlussstück 21 und ein mit dem Anschlussrohrstück 16 verbundenes Auslassanschlussstück 22. Das Einlassanschlussstück 21 geht bei dem gezeigten Ausführungsbeispiel über einen Krümmungsabschnitt 23 in einen Rohr-in-Rohr-Abschnitt 24 über, der ein Außenrohr 25 und ein Innenrohr 26 umfasst. Das Außenrohr 25 hat den Nenndurchmesser des entsprechenden Außenrohres 27 der Rohr-in-Rohr-Leitung und ist an das Außenrohr 27 der Rohr-in-Rohr-Leitung 11 angeschlossen. Das Innenrohr 26 erstreckt sich konzentrisch zu dem Außenrohr 25 und ist an das Innenrohr 28 der Rohr-in-Rohr-Leitung 11 angeschlossen. Das andere Ende des Innenrohres 26 kommuniziert mit dem Einlassanschlussstück 22, und zwar über einen Übergangsabschnitt 29, der den Durchmesser des Innenrohres 26 auf den größeren Durchmesser des Auslassanschlussstückes 22 überführt.

Bei dem gezeigten Ausführungsbeispiel ist die Anschlussarmatur 12 über Flanschverbindungen 30 mit der Venturiarmatur 13 verbunden. Eine entsprechende Flanschverbindung 31 zeigt sich auch zwischen dem anderen Ende der Anschlussarmatur, welches das Doppelrohranschlussstück 32 ausbildet.

### Bezugszeichenliste

- 1: Trink- und Brauchwassersystem
- 2: Übergabestelle
- 3: Versorgungsnetz
- 4: Wasserzähler
- 5: Filter
- 6: Strang
- 7: Strang
- 8: Verbraucher, Wasserhahn Küche
- 9: Verbraucher, Dusche
- 10: Verbraucher, Wasserhahn
- 11: Rohr-in-Rohr-Leitung
- 12: Anschlussarmatur
- 13: Venturiarmatur
- 14: Rohrstück
- 15: Anschlussrohrstück
- 16: Anschlussrohrstück
- 17: Querschnittsverengung
- 18: Einfädelöffnung
- 19: Ausfädelöffnung
- 20: Ringleitung
- 21: Einlassanschlussstück
- 22: Auslassanschlussstück
- 23: Krümmungsabschnitt
- 24: Rohr-in-Rohr-Abschnitt
- 25: Außenrohr
- 26: Innenrohr
- 27: Außenrohr der Rohr-in-Rohr-Leitung
- 28: Innenrohr der Rohr-in-Rohr-Leitung
- 29: Übergangsabschnitt
- 30: Flanschverbindung
- 31: Flanschverbindung
- 32: Doppelrohranschlussstück

## Patentansprüche

1. Anschlussvorrichtung (12, 13) für ein Trink- und Brauchwassersystem, welches wenigstens einen Strang (7) für die Zuleitung von Wasser an Verbraucher (8, 9, 10) aufweist;
wobei die Anschlussvorrichtung (12, 13) eine Venturiarmatur (13) mit einer Einfädelöffnung (18), einer Ausfädelöffnung (19) und ein einen Abschnitt des Strangs (7) bildendes Rohrstück (14) enthält;
wobei in dem Rohrstück (14) eine Querschnittsverengung (17) ausgebildet ist;
wobei der Querschnittsverengung (17) die Einfädelöffnung (18) in Strömungsrichtung vor-und die Ausfädelöffnung (19) in Strömungsrichtung nachgelagert ist,
**gekennzeichnet durch**
eine Anschlussarmatur (12, 13) mit einem Einlassanschlussstück (21); einem Auslassanschlussstück (22) und einem mit einer Rohr-in-Rohr-Leitung (11) verbindbaren Doppelrohranschlussstück (32);
wobei das Einlassanschlussstück (21), das Auslassanschlussstück (22) und das Doppelrohranschlussstück (32) Teil eines einheitlichen Gehäuses sind;
das Doppelrohranschlussstück ein Innenrohr (26) und ein Außenrohr (25) umfasst, eines von Innen- und Außenrohr (26, 25) mit dem Einlassanschlussstück (21) kommuniziert und das andere Innen- bzw. Außenrohr (26; 25) mit dem Auslassanschlussstück (22) kommuniziert;
und das Einlassanschlussstück (21) an die Einfädelöffnung (18) und das Auslassanschlussstück (22) an die Ausfädelöffnung (19) angeschlossen sind, wobei die an die Ein- und Ausfädelöffnungen (18,19) angeschlossenen Teile der Ein- und Auslassanschlussstücke (21, 22) voneinander beabstandet, parallel zueinander und rechtwinkelig zu dem Rohrstück (14) vorgesehen sind,
wobei die Anschlussarmatur (12) über Flanschverbindungen (30) mit der Venturiarmatur (13) verbunden ist
und das Doppelrohranschlussstück (32) über eine weitere Flanschverbindung (31) an die Rohr-in-Rohr-Leitung (11) anschließbar ist.

2. Anschlussvorrichtung (12, 13) für ein Trink- Brauchwassersystem nach Anspruch 1, **dadurch gekennzeichnet, dass** das Innenrohr (26) mit dem Einlassanschlussstück (21) kommuniziert.

3. Anschlussvorrichtung (12, 13) für ein Trink- oder Brauchwassersystem nach Anspruch 1, **dadurch gekennzeichnet, dass** das Außenrohr (25) mit dem Einlassanschlussstück (21) kommuniziert.

## Claims

1. Connection device (12, 13) for a drinking or domestic water system, which comprises at least one branch (7) for supplying water to tapping points (8, 9, 10);
the connection device (12, 13) containing a venturi valve (13) having an entry opening (18), an exit opening (19) and a pipe piece (14) forming a section of the line (7);
a cross-sectional constriction (17) being formed in the pipe piece (14);
the entry opening (18) being arranged upstream of the cross-sectional constriction (17) in the flow direction and the exit opening (19) being arranged downstream of the cross-sectional constriction (17) in the flow direction,
**characterised by**
a connection valve (12, 13) having an inlet connection piece (21), an outlet connection piece (22) and a double pipe connection piece (32) which can be connected to a pipe-in-pipe line (11);
the inlet connection piece (21), the outlet connection piece (22) and the double pipe connection piece (32) being part of a uniform housing;
the double pipe connection piece comprising an inner pipe (26) and an outer pipe (25), one of the inner and outer pipe (26, 25) communicating with inlet connection piece (21) and the other, inner or outer pipe (26; 25) communicating with the outlet connection piece (22);
and the inlet connection piece (21) being connected to the entry opening (18) and the outlet connection piece (22) being connected to the exit opening (19), the parts of the inlet and outlet connection pieces (21, 22) connected to the entry and exit openings (18, 19) being separated from one another, mutually parallel and at a right angle to the pipe piece (14),
the connection valve (12) being connected to the venturi valve (13) by means of flange connections (30),
and the double pipe connection piece (32) being connectable to the pipe-in-pipe line (11) by means of a further flange connection (31).

2. Connection device (12, 13) for a drinking or domestic water system according to Claim 1, **characterised in that** the inner pipe (26) communicates with the inlet connection piece (21).

3. Connection device (12, 13) for a drinking or domestic water system according to Claim 1, **characterised in that** the outer pipe (25) communicates with the inlet connection piece (21).

## Revendications

1. Dispositif de connexion (12, 13) pour un système d'eau potable ou d'eau brute comportant au moins une conduite (7) pour amener de l'eau à des utilisateurs (8, 9, 10) ;
dans lequel le dispositif de connexion (12, 13) comporte un accessoire à tube de Venturi (13) avec une ouverture d'insertion (18), une ouverture d'extraction (19) et un élément de tube (14) constituant une section de ladite conduite (7) ;
dans lequel une constriction transversale (17) est constituée dans l'élément de tube (14) ;
dans lequel la constriction transversale (17) est agencée avant l'ouverture d'insertion (18) en direction de l'écoulement et après l'ouverture d'extraction (19) en direction de l'écoulement,
**caractérisé par**
un accessoire de connexion (12, 13) avec une pièce de connexion d'entrée (21), une pièce de connexion de sortie (22) et une pièce de connexion à double tube (32) connectable à une conduite à tubes concentriques (11) ;
dans lequel la pièce de connexion d'entrée (21), la pièce de connexion de sortie (22) et la pièce de connexion à double tube (32) font partie d'un boîtier unitaire ;
la pièce de connexion à double tube comporte un tube interne (26) et un tube externe (25), un tube parmi les tubes interne et externe (26, 25) communique avec la pièce de connexion d'entrée (21), et l'autre tube respectif parmi les tubes interne et externe (26 ; 25) communique avec la pièce de connexion de sortie (22) ;
et la pièce de connexion d'entrée (21) est connectée à l'ouverture d'insertion (18) et la pièce de connexion de sortie (22) à l'ouverture d'extraction (19), dans lequel les pièces connectées aux ouvertures d'insertion et d'extraction (18, 19) des pièces de connexion d'entrée et de sortie (21, 22) sont agencées de manière espacée et parallèle entre elles, et de manière perpendiculaire à l'élément de tube (14),
dans lequel l'accessoire de connexion (12) est connecté à l'accessoire à tube de Venturi (13) via des connexions à bride (30), et la pièce de connexion à double tube (32) peut être connectée à la conduite à tubes concentriques (11) via une autre connexion à bride (31).

2. Dispositif de connexion (12, 13) pour un système d'eau potable ou d'eau brute selon la revendication 1, **caractérisé en ce que** le tube interne (26) communique avec la pièce de connexion d'entrée (21).

3. Dispositif de connexion (12, 13) pour un système d'eau potable ou d'eau brute selon la revendication 1, **caractérisé en ce que** le tube externe (25) communique avec la pièce de connexion d'entrée (21).
